# EUROPEAN PATENT APPLICATION

(11) **EP 4 835 595 A1**
(43) Date of publication of application: **04.11.2026**
(21) Application number: 25173325.9
(22) Date of filing: 29.04.2025
(51) Int. Cl.: G05B 23/00

(54) **PLANT FOR PRODUCING BITUMINOUS CONGLOMERATE AND METHOD FOR PREDICTIVE MONITORING OF SAID PLANT**

(71) Applicant: MARINI S.p.A., 48011 Alfonsine (Ravenna) (IT)
(72) Inventor: PIOGGIA, Roberto, 48121 Ravenna (IT)
(74) Representative: Milli, Simone

(57) **Abstract**

Described is a plant (1) for producing bituminous conglomerate, comprising at least the following treatment components:
- at least one apparatus (2A) for drying the basic ingredients of the bituminous conglomerate and provided with at least:
- a device (2B) for sucking and filtering air;
- a unit (2C) for rotating a heat exchanger for the process of drying at least one basic ingredient:
- an apparatus (2D) for mixing basic ingredients;
- a device (100) for monitoring the state of wear of at least one of the above-mentioned treatment components (2A, 2B, 2C, 2D) subject to monitoring, comprising:
- a plurality of first sensors (3A, 3B, 3C, 3D), associated with the at least one of the above-mentioned treatment components (2A, 2B, 2C, 2D) subject to monitoring, for making available respective input signals (SI) representative of first operating quantities associated with the operation of said at least one treatment component (2A, 2B, 2C, 2D) subject to monitoring;
- at least a second sensor (4), associated with the at least one of the above-mentioned treatment components (2A, 2B, 2C, 2D) for making available an output signal (SU) representative of a second operating quantity associated with the operation of said at least one treatment component (2A, 2B, 2C, 2D);
- a processing and control unit (101) comprising:
- a module (6) for calculating parameters representative of a transfer function, with said transfer function defining a ratio between the at least one output signal (SU) and the input signals (SI),
- an artificial intelligence module (10), comprising a neural network (11) having as inputs (I) the above-mentioned parameters representative of the calculated transfer function, and as output (U) at least one status parameter of the treatment component (2A, 2B, 2C, 2D) subject to monitoring.

## Description

This invention relates to a plant for making bituminous conglomerate and a predictive monitoring method.

As is known, in the sector for the production of bituminous conglomerate, the components of the bituminous conglomerate production plant are subject to failure.

For this purpose, it is opportune to provide for operating maintenance methods that allow the plant for the production of bituminous conglomerate to be maintained in perfect efficiency.

According to a first method, the components of the plant for the production of bituminous conglomerate are subject to checks and/or replacements at predetermined time intervals, according to a maintenance plan.

it should be noted that, alternatively, according to a second method, for components which do not have a particular critical aspect, it is possible to provide methods of intervention with breakage of the component, that is to say, the component is replaced when it undergoes damage which adversely affects the functionality.

This method of replacement upon breakage certainly cannot be adopted for components with particular critical aspects, that is to say, components whose malfunction could result in a shutdown of the entire production plant or a significant part of it.

It should also be noted that adopting a maintenance mode at predetermined time intervals has, on the other hand, critical issues in terms of optimisation: it is not in fact easy or banal to provide the optimum maintenance interval; in effect, having a maintenance interval which is too short would increase the costs for controlling the maintenance itself, whilst on the other hand, having a maintenance interval which is too long could adversely affect the effectiveness of the maintenance.

A strongly felt need in the sector in question is therefore that of having a plant for producing bituminous conglomerate in which it is possible to monitor, substantially in real time, the status of a component of the plant, so as to be able to intervene promptly when necessary.

The aim of this invention is to satisfy the above-mentioned need and to overcome the above-mentioned limitations of the prior art by providing a plant for making bituminous conglomerate and a predictive monitoring method which allows the status of a component of the plant to be monitored, substantially in real time, so as to be able to intervene promptly as necessary.

The technical features of the invention, with reference to the above aims, are clearly described in the claims below and its advantages are more apparent from the detailed description which follows, with reference to the accompanying drawings which illustrate a non-limiting embodiment of the invention by way of an example, and in which:

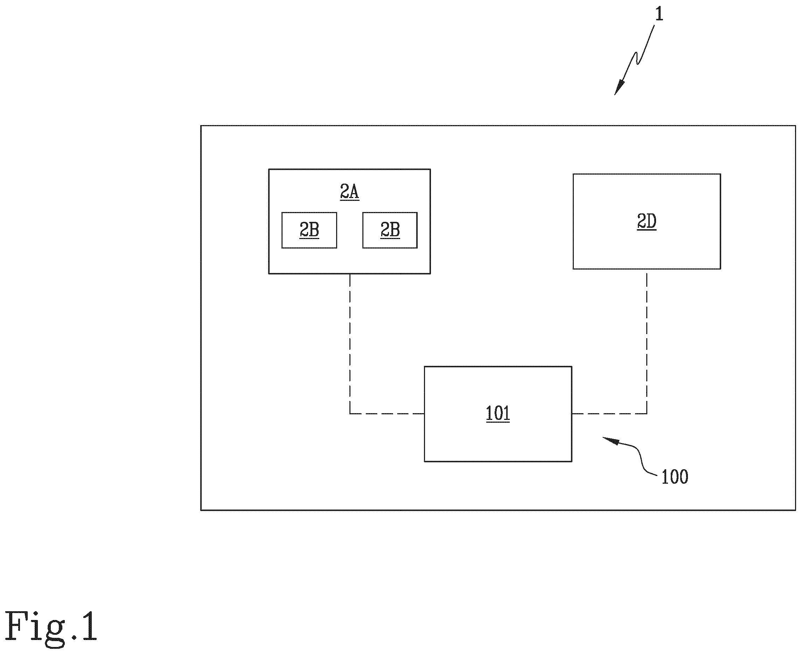

- Figure 1 schematically illustrates a plant for producing bituminous conglomerate according to the invention;

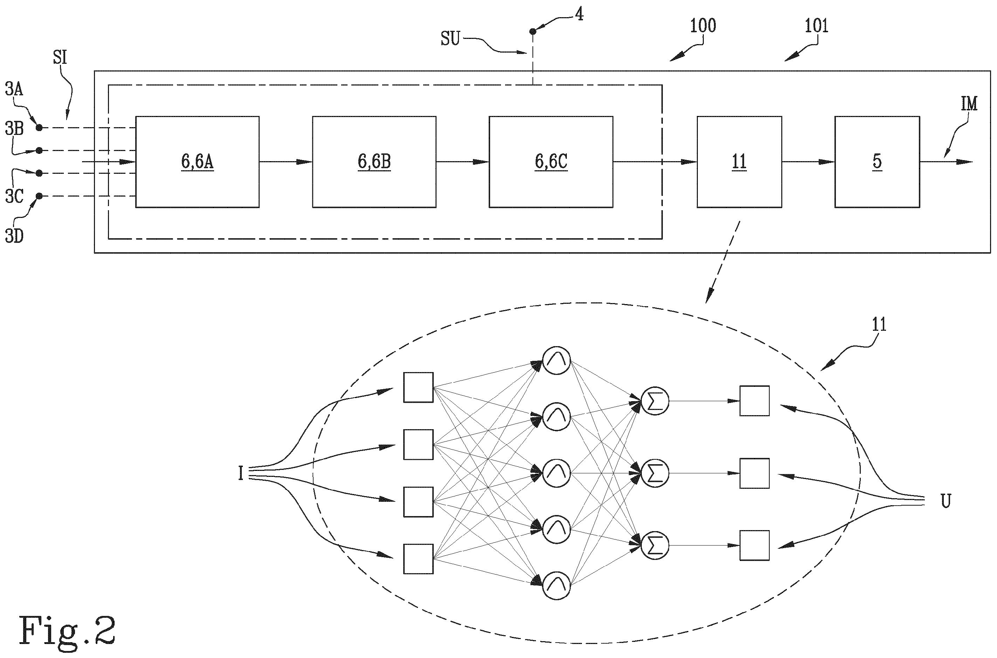

- Figure 2 schematically illustrates a detail of the plant for producing bituminous conglomerate according to the invention.

According to one aspect of this invention, a plant 1 for producing bituminous conglomerate is defined.

The expression "bituminous conglomerate" is used to mean a product designed to allow the production of road surfaces, for example designed to make up a plurality of types of asphalts.

The plant 1 comprises at least the following treatment components:
- at least one apparatus 2A for drying the basic ingredients of the bituminous conglomerate and provided with at least:
- a device 2B for sucking and filtering air;
- a unit 2C for rotating a heat exchanger for the process of drying at least one basic ingredient:
- an apparatus 2D for mixing basic ingredients.

According to the invention, the plant 1 comprises a device 100 for monitoring the state of wear of at least one of the above-mentioned treatment components 2A, 2B, 2C, 2D subject to monitoring.

The monitoring device 100 comprises:
- a plurality of first sensors 3A, 3B, 3C, 3D, associated with said at least one of the above-mentioned treatment components 2A, 2B, 2C, 2D subject to monitoring, for making available respective input signals SI representative of first operating quantities associated with the operation of said at least one treatment component 2A, 2B, 2C, 2D subject to monitoring;
- at least a second sensor 4, associated with the at least one of the above-mentioned treatment components 2A, 2B, 2C, 2D for making available an output signal SU representative of a second operating quantity associated with the operation of said at least one treatment component 2A, 2B, 2C, 2D;
- a processing and control unit 101 comprising:
- a module 6 for calculating parameters representative of a transfer function, with said transfer function defining a ratio between the at least one output signal SU and the input signals SI,
- an artificial intelligence module 10, comprising a neural network 11 having as inputs I the above-mentioned parameters representative of the calculated transfer function, and as output U at least one status parameter of the treatment component 2A, 2B, 2C, 2D subject to monitoring.

According to another aspect, the plant 1 also comprises a user interface 5, connected to the artificial intelligence module to make available, as a function of the output U of the neural network 11, a maintenance indication IM associated with the status of the component 2A, 2B, 2C, 2D subject to monitoring, derived from said neural network 11.

Preferably, the status parameter of the treatment component 2A, 2B, 2C,2D subject to monitoring comprises a numerical parameter, between a minimum and maximum value, representative of a probability of a fault or wear of the treatment component 2A, 2B, 2C, 2D subject to monitoring.

It should be noted that the maintenance indication IM may coincide with the status parameter of the treatment component 2A, 2B, 2C, 2D. According to another aspect, the maintenance indication IM is a graphical text indication designed to be interpreted by an operator.

The maintenance indication IM may be, for example, an indication expressing the status or wear fault of the treatment component 2A, 2B, 2C, 2D, for example an indication of the type of "component to be replaced" or "component faulty".

According to another aspect, the neural network 11 has been trained by means of a data set comprising the above-mentioned parameters representative of the transfer function and label associated with said parameters representative of the transfer function, with said labels relating to values of the status parameter of the treatment component 2A, 2B, 2C, 2D subject to monitoring.

Preferably, the parameters representative of a transfer function comprise a plurality of zeros and poles of said transfer function.

According to yet another aspect, the parameters representative of a transfer function comprise a static gain of said transfer function. According to another aspect, the module 6 for calculating parameters representative of a transfer function is configured for executing the calculation of said transfer function, operating a discretization, by means of a transform Z.

According to another aspect, the module 6 for calculating parameters representative of a transfer function (in the Laplace domain) comprises the following modules:
- a first module 6A for linearization of the transfer function, configured for linearizing, about a predetermined point of equilibrium, an intermediate mathematical function representative of the transfer function, on the basis of the input signals SI and of the output signal SU;
- a second module 6B for estimating poles and zeros, connected to the first module 6A for linearization of the transfer function, and configured for determining poles and zeros of the transfer function by means of a transform Z (that is to say, by a discretization).

According to yet another aspect, the module 6 for calculating parameters representative of a transfer function in the Laplace domain also comprises a third calculation module 6C, connected to the second module 6B, configured for calculating the static gain of the transfer function. According to another aspect, the output U of the neural network 11 defines a probability that the component subject to monitoring is faulty or worn. Some examples, referring to specific treatment components 2A, 2B, 2C, 2D, will be described below.

According to a first aspect, the above-mentioned treatment component 2A, 2B, 2C, 2D, subject to monitoring is defined by the air suction and filtering device 2B. According to this aspect, the first sensors 3A, 3B, 3C, 3D are configured for measuring one or more of the following operating quantities:
- depressurization of a burner;
- depressurization of a filter;
- air temperature;
- quantity of powder;
- vibration of a fan;
- power absorption of a motor of a fan.

According to this aspect, the second sensor 4 is configured to measure a speed of a fan (forming part of the air suction and filtering device 2B). According to a first aspect, the above-mentioned status parameter of the treatment component 2A, 2B, 2C, 2D subject to monitoring is representative of a degree of obstruction of the air suction and filtering device 2B.

Advantageously, it should be noted that if the air suction and filtering device 2B does not operate correctly, the concentration of powder increases and, consequently, the sensor suitable for detecting a concentration of powder detects an increase in the concentration of powder.

Moreover, it should be noted that if the motor of the fan unit has malfunctions (e.g. wear or failure of bearings, electrical problems, etc.), increases in vibration levels and/or an increase in the values of current, voltage or power absorbed may occur; in these circumstances, the signal of the vibration sensor and/or the sensor designed to measure a voltage, current or absorbed power will modify relative to the state in which the component is normal.

According to a second aspect, the above-mentioned treatment component 2A, 2B, 2C, 2D, subject to monitoring is defined by the rotation unit 2C of a heat exchanger for the process for drying at least one basic ingredient. According to this aspect, the first sensors 3A, 3B, 3C, 3D are configured for measuring one or more of the following operating quantities:
- temperature of the basic ingredients;
- air temperature;
- productivity.

It should be noted that the second sensor 4 is configured to measure a speed of a drying drum or a power of a burner (forming part of the rotation unit 2C of a heat exchanger for the drying process).

According to the second aspect, advantageously, it should be noted that the vibration or a parameter associated with one or more of the motors to set the mixer in rotation is modified as a result of wear of the rotation unit 2C, thereby allowing the state of the motors and/or other components of the mixer to be measured.

In effect, in a mixer, any unbalancing, misalignments or out of alignments of the mechanical components connected to the motor can produce vibrations, allowing the state of wear of the component to be derived, in such a way that correct maintenance policies can be actuated, also including replacement of the part itself.

According to another aspect, the above-mentioned status parameter of the treatment component 2A, 2B, 2C, 2D subject to monitoring represents a degree of efficiency of the drying process.

According to a third aspect, the above-mentioned treatment component 2A, 2B, 2C, 2D, subject to monitoring, is defined by the apparatus 2D for mixing basic ingredients.

Preferably, said apparatus 2D for mixing basic ingredients is equipped with a mixer associated with a motor.

According to this third aspect, the first sensors 3A, 3B, 3C, 3D are configured for measuring one or more of the following operating quantities:
- vibration of the motor;
- absorption power of the motor;
- speed of the motor;
- motor torque.

According to this third aspect, the second sensor 4 is configured to measure a torque of the motor associated with the mixer.

According to the third aspect, the above-mentioned status parameter of the treatment component 2A, 2B, 2C, 2D subject to monitoring is associated with a degree of efficiency of the drying process.

It should be considered, for example, that with specific reference to the apparatus 2D for mixing basic ingredients, that the mixing apparatus 2D comprises a mixer equipped with at least one blade, preferably a plurality of blades.

It has been observed by the Applicant that the deterioration of the mixing blades leads to a considerable (positive) variation in the torque/power absorbed by the motor which drives the blades; this determines a modification of the transfer function of the mixing apparatus 2D.

On the other hand, if the deterioration of the blades should lead to a situation wherein the basic material passes through the mixing apparatus 2D without engagement by the blades of the mixer, the Applicant has observed that there is a reduction in the torque and power of the motor driving the mixing blades; this determines a modification of the transfer function of the mixing apparatus 2D.

Preferably, according to another aspect, said neural network 11 is of the Radial Basic Function type.

The invention defines a method for monitoring at least one treatment component 2A, 2B, 2C, 2D of a plant 1 for making bituminous conglomerate (hereinafter also referred to as the treatment component 2A, 2B, 2C, 2D subject to monitoring).

According to the invention, the method comprises the following steps:
- preparing a plurality of first sensors 3A, 3B, 3C, 3D and associating them with at least one of the above-mentioned treatment components 2A, 2B, 2C, 2D subject to monitoring;
- preparing at least a second sensor 4 and associating it with at least one of the above-mentioned treatment components 2A, 2B, 2C, 2D subject to monitoring;
- preparing a processing and control unit 101 having an artificial intelligence module 10, comprising a neural network 11.

Moreover, the method comprises the following steps:
- preparing a user interface 5;
- making available to the processing and control unit 101 respective input signals SI representative of first operating quantities associated with the operation of said at least one treatment component 2A, 2B, 2C, 2D, subject to monitoring;
- providing an output signal SU, representative of a second operating quantity associated with the operation of said at least one treatment component 2A, 2B, 2C, 2D, to the processing and control unit 101;
- calculating, using the processing and control unit 101, parameters representative of a transfer function, with said transfer function defining a ratio between the at least one output signal SU and the input signals SI,
- transmitting said parameters representative of the transfer function at the input to the neural network 11;
- deriving as output, by means of the neural network 11, at least one status parameter of the treatment component 2A, 2B, 2C, 2D subject to monitoring.

According to another aspect, the method comprises a step of providing, by means of the user interface 5, a maintenance indication IM associated with the status of the component 2A, 2B, 2C, 2D subject to monitoring calculated by said neural network 11.

It should be noted that the user interface 5 may be defined by any audio / video device and/or by any data transmission device.

According to another aspect, the step of calculating, using the processing and control unit 101, parameters representative of a transfer function comprises a step of calculating poles and zeros of the transfer function.

According to yet another aspect, the step of calculating, by means of the processing and control unit 101, parameters representative of a transfer function comprises a step of calculating a static gain of said transfer function.

According to another aspect, the step of calculating, by means of the processing and control unit 101, parameters representative of a transfer function, comprises a step of linearization of the transfer function about a predetermined point of equilibrium, to define the transfer function as a set of multiplicative coefficients of the poles and zeros.

It should be noted that the point of equilibrium is, preferably, a point wherein one or more of the derivatives (of the transfer function or of an intermediate mathematical function connected to it) is/are zero.

According to yet another aspect, the step of calculating, using the processing and control unit 101, parameters representative of a transfer function comprises a step of estimating, by means of a transform Z (separate in time), said multiplicative ratios of the poles and zeros, to determine poles and zeros of the transfer function.

It should be noted that, preferably, the output U of said neural network 11 is defined by a numerical value between a minimum value and a maximum value, representative of a probability that the component subject to monitoring is faulty or worn.

According to yet another aspect, the method comprises a step of training the neural network 11, comprising the following steps:
- receiving signals from said first sensors 3A, 3B, 3C, 3D and from at least a second sensor 4;
- determining parameters representative of a transfer function on the basis of the signals of said first sensors 3A, 3B, 3C, 3D and at least a second sensor 4, with said transfer function defining a ratio between the at least one output signal SU received from the second sensor 4 and the input signals SI received from the first sensors 3A, 3B, 3C, 3D;
- creating a training data set, comprising parameters representative of a predetermined transfer function, and labels, associated with them, representative of the status parameter of the processing component 2A, 2B, 2C, 2D subject to monitoring;
- performing a supervised learning of said neural network 11 using said training data.

As is known, the step of performing a supervised learning of the neural network 11 consists in a process in which the model learns to perform a predetermined activity - such as the classification or the regression - using said training data consisting of pairs of inputs - outputs (labelled data).

During this step of performing a supervised learning of the neural network 11, each input is supplied to the neural network 11, which generates an output.

This output is compared with the expected output (label) by means of an error function (or loss function). The calculated error is then used to update the internal weights of the network through an optimisation algorithm, preferably but not necessarily the backpropagation of the gradient combined with the method of lowering the gradient.

According to yet another aspect, said neural network 11 is of the Radial Basic Function type.

The invention relates to a method for making bituminous conglomerate, comprising the following steps:
- providing a plant 1 for producing bituminous conglomerate, comprising at least the following treatment components 2A, 2B, 2C, 2D:
- at least one apparatus 2A for drying the basic ingredients of the bituminous conglomerate and provided with at least:
- a device 2B for sucking and filtering air;
- a unit 2C for rotating a heat exchanger for the process of drying at least one basic ingredient:
- an apparatus 2D for mixing basic ingredients.

According to another aspect, the method comprises the following steps:
- drying the basic ingredients of the bituminous conglomerate;
- placing said basic ingredients inside the heat exchanger;
- mixing the basic ingredients (inside the mixing device 2D), for making the bituminous conglomerate;
- actuating all the steps of the predictive monitoring method (described above) on at least one above-mentioned treatment component 2A, 2B, 2C, 2D of the plant 1 for making bituminous conglomerate.

Advantageously, in the plant 1 according to the invention, the single treatment component 2A, 2B, 2C, 2D may always be replaced in optimum conditions.

In effect, the estimation of the transfer function by the combined use of first sensors 5A, 5B, 5C, 5D and an output sensor 4, representative of the operation of the treatment component 2A, 2B, 2C, 2D has been found, experimentally, to be particularly reliable.

The specific advantages of using, in combination, a module for calculating the transfer function with a neural network 11 is described below.

The use, as input to the neural network 11, of at least one parameter representative of the transfer function means that it is possible to avoid mathematical anomalies which there would be, for example, in the case of direct input of the signals of the sensors.

It should also be noted that the purpose of the neural network 11 is to reduce the complexity of the reverse calculation for determining the estimation of the status parameter, starting from the physical model (inversions of non-linear differential equations).

Moreover, according to another aspect, by means of the neural network 11, it is possible to combine both the data deriving from the physical model and the status of the method in progress
(for example, which recipe is in progress, with which production and material, climatic conditions, humidity, etc.), by means of a suitable choice of the inputs I of the neural network.

Some aspects relating to the predictive maintenance method and to the plant 1 are described in more detail below.

According to an aspect, the calculation module 6 determines, by means of a plurality of calculations, that is to say, further modules, a transfer function of a model of the component (2A, 2B, 2C, 2D) subject to non-linear monitoring, time-invariant, of the MIMO type, of the component.

The transfer function connects, mathematically, the output signal of the second sensor 4 with the input signals of the first sensors SI.

The non-linear time-invariant model (of the MIMO type) of the component (2A, 2B, 2C, 2D) subject to monitoring comprises a first so-called status equation (which is a differential equation which expresses the variation of the statuses of the model over time), that is to say, a function of the inputs at time t and of the status variables at time t.

Such a relationship is a relationship of the type: x'(t) = f(x(t), u(t)), where x(t) is a status variable (or a vector of variables) and u(t) is an input (or a vector representative of a plurality of inputs) and x'(t) represents a first derivative (or a vector or matrix representative of the derivative before the statuses).

It should be noted that f() is a mathematical function, which allows x'(t) to be calculated when x(t) and u(t) are known.

The model of the component (2A, 2B, 2C, 2D) subject to non-linear time-invariant monitoring comprises a second so-called output equation.

The second so-called output equation is a relationship of the type: y(t) = g(x(t), u(t)), where y(t) represents the output of the plant (or a vector representative of the outputs), and x(t) is its status at time t (or a vector representative of the statuses at time t) and u(t) is the input at time t (that is to say, a vector representative of the inputs at time t).

It should be noted that g() is a mathematical function, which allows y(t) to be calculated when x(t) and u(t) are known.

According to another aspect, the step of calculating the transfer function of the component (2A, 2B, 2C, 2D) subject to monitoring comprises a step of linearization of the mathematical functions f() and g() about a point of equilibrium.

These mathematical functions f() and g() constitute the above-mentioned at least one intermediate mathematical function, mentioned above.

Preferably, the predetermined point of equilibrium corresponds to the point where the derivative before f() is zero.

It should therefore be noted that the linearization step comprises the use of the Taylor formula, preferably approximated to the first order, for calculating f(x(t), u(t)), g(x(t), u(t)).

According to this aspect, f(x(t), u(t)) and g(x(t), u(t)) are expressed by means of a plurality of matrices, known as Jacobian matrices (A, B, C, D). Since the method comprises calculating the transfer function, in the Laplace domain, that is to say, G(s)=Y(S)/U(s), the method comprises a step of calculating G(s) = C(sl-A)-1B+D, where B, C, D are the Jacobean matrices previously mentioned (that is to say, matrices consisting of a plurality of numbers characteristic of the statuses of the plant) and I is the identity matrix.

According to one aspect, the method comprises the step of calculating (sl-A).

According to another aspect, the method comprises a step of calculating (sI-A)^-1.

According to another aspect, the method comprises a step of determining a plurality of first coefficients (br, br-1,.....b1,b0) associated with zeros of the transfer function.

According to another aspect, the method comprises a step of determining a plurality of second coefficients (an, an-1.....a1,a0) associated with the poles of the transfer function.

In accordance with the formula described above, the method comprises calculating coefficients (br, br-1,...b1, b0) associated with zeros of the transfer function.

These coefficients are expressed by the following formula.

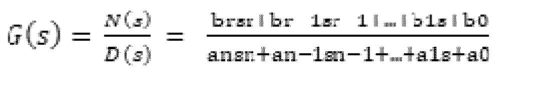

Where s is the variable of the Laplace transform.

According to the formula described above, the method comprises calculating the coefficients (br, br-1,...b1, b0), (an, an-1.....a1,a0), respectively, of the zeros and poles of the transfer function.

According to one aspect, the step of calculating the coefficients (br, br-1,...b1, b0), (an, an-1.....a1,a0), respectively, of the zeros and poles of the transfer function (in the Laplace domain) comprises a step of discretizing (that is to say, passing from a continuous time domain to a discrete domain) the above-mentioned formula relative to G(s) which expresses the transfer function on the basis of a ratio between poles and zeros and the respective multiplicative coefficients.

In that sense, the function G(s) is transformed, by the discretization effect, into a transform function of the G(z) type as follows:

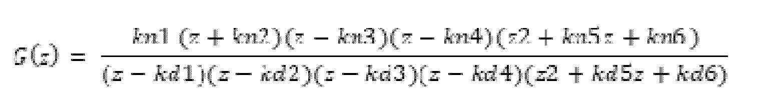

It should be noted that, in this step, a transform function Z is used.

It should be noted that the above-mentioned transform function must not be understood as limiting the number of coefficients associated with poles and zeros relative to the transfer function (discretized).

According to the method, in order to discretize, that is to say, transform, the above-mentioned formula relative to G(s), a sampling time interval is used.

The sampling time interval is between 100ms and 250ms, preferably between 170ms and 190ms.

According to one aspect, the method comprises a step of estimating, using a so-called *"Recursive Least Square Estimator"* algorithm, the discretized coefficients of the poles and zeros, from the discretized function G(z) corresponding to G(s).

According to the method, there is a step of estimating, using the so-called *"Recursive Least Square Estimator"* algorithm, the discretized ratios of the poles and zeros (kd1....,kd6; kn2,.....; kd6, kn1,....,kn6), from the discretized function corresponding to G(s) of lower order (more precisely, a number n of coefficients for the poles and a number m of coefficients for the zeros).

Preferably, the number n of coefficients for the poles is equal to the number m of coefficients for the zeros.

According to another aspect, the number n of coefficients for the poles and the number m of coefficients for the zeros is less than 10, more preferably less than 8 (still more preferably less than or equal to 6).

According to another aspect, the method comprises a step of calculating the static gain (K*) of the transfer function (discretized, that is, G(z)). According to this aspect, the static gain is calculated, preferably, as the limit of G(z) for z->1.

According to yet another aspect, the method comprises using the static gain (K*) calculated as the input of the neural network 11.

In the specific case in question, wherein the component subject to monitoring is the air suction and filtering device 2B, the status of the component calculated by the neural network 11, is defined by a fluid resistance.

Preferably, the neural network 11 comprises a first layer, designed to receive the input(s) I, of the unweighted type.

In these circumstances, the first state transmits to the next second layer the values received from the inputs I (without alteration).

The second layer of neurons of the network (that is, the one after the first one) has weighted connections, with the output nodes performing simple sums to derive the output of the network: ${y}_{m} = {\sum }_{h = 1}^{H} {u}_{m , h} {a}_{h}$ where um,h are the weights of the final layer.

According to an aspect, with specific reference to the application of the component device 2B for suction and filtering of the air, the trained neural network 11 makes it possible to establish a map, that is to say, a correspondence, between the static gain and the fluid resistance value (representative of the component device 2B for suction and filtering of the air).

Preferably, more generally speaking, the neural network 11 comprises one or more hidden layers, consisting of a plurality of neurons (preferably between 15 and 100, even more preferably between 20 and 60). Preferably, the neurons of the hidden layers have an activation function of the type: ${a}_{h , k} = exp \left(-\frac{{\left‖{x}_{k}-{x}_{k}\right‖}^{2}}{{σ}_{h}^{2}}\right)$

Where ah,k denotes the activation of the h-th neuron in the hidden layer in response to the input xk with each neuron characterised by N+1 parameters, such as, for example, the N-dimensional xk position of the centre of the radial unit in the inlet space and a scale parameter of the distance σh' (similar to the standard deviation in a normal distribution).

The method for training the neural network is briefly described below, with reference to the specific case of the air suction and filtering device 2B.

Preferably, in the specific case of the air suction and filtering device 2B, the neural network 11 has been trained with a date set comprising a plurality of samples containing static gains associated with respective fluid resistance labels.

As mentioned above, the predictive monitoring method is particularly advantageous, since it allows the status of the most critical components of the plant 1 to be diagnosed, even in real time, allowing any faults and/or wear of the components subjected to predictive monitoring to be promptly identified.

## Claims

1. A plant (1) for producing bituminous conglomerate, comprising at least the following processing components:
- at least one apparatus (2A) for drying the basic ingredients of the bituminous conglomerate and provided with at least:
- a device (2B) for sucking and filtering air;
- a unit (2C) for rotating a heat exchanger for the process of drying at least one basic ingredient:
- an apparatus (2D) for mixing basic ingredients;
- a device (100) for monitoring the state of wear of at least one of the above-mentioned treatment components (2A, 2B, 2C, 2D) subject to monitoring, comprising:
- a plurality of first sensors (3A, 3B, 3C, 3D), associated with the at least one of the above-mentioned treatment components (2A, 2B, 2C, 2D) subject to monitoring, for making available respective input signals (SI) representative of first operating quantities associated with the operation of said at least one treatment component (2A, 2B, 2C, 2D) subject to monitoring;
- at least a second sensor (4), associated with the at least one of the above-mentioned treatment components (2A, 2B, 2C, 2D) for making available an output signal (SU) representative of a second operating quantity associated with the operation of said at least one treatment component (2A, 2B, 2C, 2D);
- a processing and control unit (101) comprising:
- a module (6) for calculating parameters representative of a transfer function, with said transfer function defining a ratio between the at least one output signal (SU) and the input signals (SI),
- an artificial intelligence module (10), comprising a neural network (11) having as inputs (I) the above-mentioned parameters representative of the calculated transfer function, and as output (U) at least one status parameter of the treatment component (2A, 2B, 2C, 2D) subject to monitoring;
- a user interface (5), connected to the artificial intelligence module to make available, as a function of the output (U) of the neural network (11), a maintenance indication (IM) associated with the status of the component (2A, 2B, 2C, 2D) subject to monitoring calculated by said neural network (11).

2. The plant (1) according to the preceding claim, wherein the neural network (11) has been trained by means of a data set comprising the above-mentioned parameters representative of the transfer function and labels associated with said parameters representative of the transfer function, with said labels relating to values of the status parameter of the treatment component (2A, 2B, 2C, 2D) subject to monitoring.

3. The plant (1) according to any one of the preceding claims, wherein said parameters representative of a transfer function comprise a plurality of zeros and poles of said transfer function.

4. The plant (1) according to any one of the preceding claims, wherein said parameters representative of a transfer function comprise a static gain of said transfer function.

5. The plant (1) according to any one of the preceding claims, wherein the module (6) for calculating parameters representative of a transfer function is configured for executing the calculation of said transfer function, operating a discretization, by means of a transform Z.

6. The plant (1) according to any one of the preceding claims, wherein the module (6) for calculating parameters representative of a transfer function comprises the following modules:
- a first module (6A) for linearization of the transfer function, configured for linearizing, about a predetermined point of equilibrium, an intermediate mathematical function representative of the transfer function, on the basis of the input signals (SI) and the output signal (SU);
- a second module (6B) for estimating poles and zeros, connected to the first module (6A) for linearization of the transfer function, and configured for determining poles and zeros of the transfer function by means of a transform Z.

7. The plant (1) according to the preceding claim, wherein the module (6) for calculating parameters representative of a transfer function in the Laplace domain also comprises the following module:
- a third calculation module (6C), connected to the second module (6B), configured for calculating the static gain of the transfer function.

8. The plant (1) according to any one of the preceding claims, wherein the output (U) of the neural network (11) defines a probability that the component subject to monitoring is faulty or worn.

9. The plant (1) according to any one of the preceding claims, wherein the above-mentioned treatment component (2A, 2B, 2C, 2D), subject to monitoring is defined by the air suction and filtering device (2B), and wherein the first sensors (3A, 3B, 3C, 3D) are configured for measuring one or more of the following operating quantities:
- depressurization of a burner;
- depressurization of a filter;
- air temperature;
- quantity of powder;
- vibration of a fan;
- power absorption of a motor of a fan;
the second sensor (4) being configured for measuring a speed of a fan.

10. The plant (1) according to any one of the preceding claims, wherein the above-mentioned treatment component (2A, 2B, 2C, 2D), subject to monitoring is defined by the air suction and filtering device (2B), and wherein the above-mentioned status parameter of the treatment component (2A, 2B, 2C, 2D) subject to monitoring is associated with a degree of obstruction of the air suction and filtering device (2B).

11. The plant (1) according to any one of the preceding claims, wherein the above-mentioned treatment component (2A, 2B, 2C, 2D), subject to monitoring is defined by the rotation unit (2C) of a heat exchanger for the process for drying at least one basic ingredient, and wherein the first sensors (3A, 3B, 3C, 3D) are configured for measuring one or more of the following operating quantities:
- temperature of the basic ingredients;
- air temperature;
- productivity,
the second sensor (4) being configured to measure a speed of a drying drum or a power of a burner.

12. The plant (1) according to any one of the preceding claims, wherein the above-mentioned treatment component (2A, 2B, 2C, 2D), subject to monitoring, is defined by the rotation unit (2C) of a heat exchanger for the process for drying at least one basic ingredient and wherein the above-mentioned status parameter of the treatment component (2A, 2B, 2C, 2D) subject to monitoring is associated with a degree of efficiency of the drying process.

13. The plant (1) according to any one of the preceding claims, wherein the above-mentioned treatment component (2A, 2B, 2C, 2D), subject to monitoring, is defined by the apparatus (2D) for mixing basic ingredients, said apparatus (2D) for mixing basic ingredients being equipped with a mixer associated with a motor, and wherein the first sensors (3A, 3B, 3C, 3D) are configured for measuring one or more of the following operating quantities:
- vibration of the motor;
- absorption power of the motor;
- speed of the motor;
- motor torque,
the second sensor (4) being configured to measure a torque of the motor associated with the mixer.

14. The plant (1) according to any one of the preceding claims, wherein the above-mentioned treatment component (2A, 2B, 2C, 2D), subject to monitoring is defined by the apparatus (2D) for mixing basic ingredients and wherein the above-mentioned status parameter of the treatment component (2A, 2B, 2C, 2D) subject to monitoring is associated with a degree of efficiency of the drying process.

15. The plant (1) according to any one of the preceding claims, wherein said neural network (11) is of the Radial Basic Function type.

16. A method for predictive monitoring of a treatment component (2A, 2B, 2C, 2D), subject to monitoring, of a plant (1) for making bituminous conglomerate, comprising the following steps:
- preparing a plurality of first sensors (3A, 3B, 3C, 3D) and associating them with the above-mentioned treatment component (2A, 2B, 2C, 2D);
- preparing at least a second sensor (4) and associating it with the above-mentioned treatment component (2A, 2B, 2C, 2D);
- preparing a processing and control unit (101) having an artificial intelligence module (10), comprising a neural network (11);
- preparing a user interface (5);
- making available to the processing and control unit (101) respective input signals (SI) representative of first operating quantities associated with the operation of said treatment component (2A, 2B, 2C, 2D), subject to monitoring;
- providing an output signal (SU), representative of a second operating quantity associated with the operation of said treatment component (2A, 2B, 2C, 2D), to the processing and control unit (101);
- calculating, using the processing and control unit (101), parameters representative of a transfer function, with said transfer function defining a ratio between the at least one output signal (SU) and the input signals (SI),
- transmitting said parameters representative of the transfer function at the input to the neural network (11);
- deriving as output, by means of the neural network (11), at least one status parameter of the treatment component (2A, 2B, 2C, 2D) subject to monitoring;
- providing, using the user interface (5), a maintenance indication (IM) associated with the status of the component (2A, 2B, 2C, 2D), subjected to monitoring, derived from said neural network (11).

17. The method according to the preceding claim, wherein the step of calculating, using the processing and control unit (101), parameters representative of a transfer function comprises a step of calculating poles and zeros of the transfer function.

18. The method according to claim 16 or 17, wherein the step of calculating, by means of the processing and control unit (101), parameters representative of a transfer function comprises a step of calculating a static gain of said transfer function.

19. The method according to any one of claims 16 to 18, wherein the step of calculating, by means of the processing and control unit (101), parameters representative of a transfer function comprises a step of linearization of the transfer function about a predetermined point of equilibrium, to define the transfer function as a set of multiplicative coefficients of the poles and zeros.

20. The method according to the preceding claim, wherein the step of calculating, using the processing and control unit (101), parameters representative of a transfer function comprises a step of estimating, by means of a transform Z, said multiplicative coefficients of the poles and zeros, to determine poles and zeros of the transfer function.

21. The method according to any one of claims 16 to 20, wherein the output (U) of said neural network (11) is defined by a numerical value between a minimum value and a maximum value, representative of a probability that the component subject to monitoring is faulty or worn.

22. The method according to any one of claims 16 to 21, comprising a step of training the neural network (11), comprising the following steps:
- receiving data from said first sensors (3A, 3B, 3C, 3D) and from at least one second sensor (4);
- determining parameters representative of a transfer function on the basis of said first sensors (3A, 3B, 3C, 3D) and second sensor (4), with said transfer function defining a ratio between the at least one output signal (SU) received from the second sensor (4) and the input signals (SI) received from the first sensors (3A, 3B, 3C, 3D);
- creating a training data set, comprising parameters representative of a predetermined transfer function, and labels, associated with them, representative of the status parameter of the processing component (2A, 2B, 2C, 2D) subject to monitoring;
- performing a supervised learning of said neural network (11) using said training data.

23. The method according to any one of claims 16 to 22, wherein said neural network (11) is of the Radial Basic Function type.

24. A method for making bituminous conglomerate, comprising the following steps:
- providing a plant (1) for producing bituminous conglomerate, comprising at least the following treatment components (2A, 2B, 2C, 2D):
- at least one apparatus (2A) for drying the basic ingredients of the bituminous conglomerate and provided with at least:
- a device (2B) for sucking and filtering air;
- a unit (2C) for rotating a heat exchanger for the process of drying at least one basic ingredient:
- an apparatus (2D) for mixing basic ingredients; the method including the following steps:
- drying the basic ingredients of the bituminous conglomerate;
- placing said basic ingredients inside the heat exchanger;
- mixing the basic ingredients, to make the bituminous conglomerate;
- actuating all the steps of the predictive monitoring method, according to any one of claims 16 to 23, on at least one above-mentioned treatment component (2A, 2B, 2C, 2D) of the plant (1) for making bituminous conglomerate.
